# EUROPEAN PATENT APPLICATION

(11) **EP 1 183 973 A1**
(43) Date of publication of application: **06.03.2002**
(21) Application number: 00500222.5
(22) Date of filing: 27.10.2000
(51) Int. Cl.: A47J 25/00

(54) **Device to treat a fruit (banana)**

(30) Priority: 31.08.2000 AR 0104575
(71) Applicant: Berger, Sebastian, C1425DSA Buenos Aires, C.F. (AR)
(72) Inventor: Berger, Sebastian, C1425DSA Buenos Aires, C.F. (AR)
(74) Representative: Carpintero Lopez, Francisco

(57) **Abstract**

A device to drill a fruit (banana) length-wise, and then fill it with a food product, particularly a manual device that permits in only one application make a blind drill in a banana, without need to peel it first, and without affecting its structure.

The device proposed consists in a cylindrical head-type piece (12), punched vertically, featuring on its top a trunk-conic protuberance, centrally punched which coincides with the perforation of the cylindric piece, where the latter features on the bottom base a cylindrical protuberance (2'''), defining a surface (2'''') with a crown-shaped rim, where and on the coinciding points with the corner of a virtual triangle there are disposed the ends of at least three arms (15) elastically deformable which define the surfaces adaptable to the banana wrapping, to treat it, and disposed in a coaxial form to these perforations, a tubular piece (6) with a circular section having on the bottom side an inverted trunk-conic portion (6') defining on its mouth a sharp rim, and on the opposite end this piece is embedded into a staggered hole, made on a cylindrical piece disposed perpendicularly, featuring inside the portion of the hole with a larger diameter an elastomeric bolt (8) resting on a ring-shaped protuberance; such cylindrical piece is covered on the ring shape by a cylindrical sleeve, with an oblong groove partially extended around said sleeve defining a closure of the tubular piece longitudinal conduct; projecting from the ends of the cylindrical piece the respective trunk-conic protuberances, with free double curved edges, and this device is supplemented with a cylindrical rod, having on one end a cylindrical coarsening, to clean pushing the tubular piece longitudinal conduct which was filled after having drilled the banana.

## Description

### FIELD OF INVENTION

This invention refers to a device to treat a fruit (banana), in particular a manual device to make in only one application a blind drill on the fruit withdrawing the excess of the product, and then fill it with a food product.

The main purpose of the invention is a device, consisting in a core punched head to pass through it a tubular piece featuring on its free end a tapered portion, and on the opposite end, a handle punched cross-sectionally, linked to a sleeve around said handle, featuring a partial plugging, extended in the form of a ring, featuring on the opposite end to said plugging a flap or flange to facilitate the circumferential shift thereof, extending from one zone like a circular crown on the lower head base, at least three arms elastically deformable, which are set on the comers of a triangular figure.

Another purpose aimed by the invention is a device to obtain manually a food product used massively, which is currently consumed as a fruit, and in other cases it is combined with other substances added such as chocolate, cream, toffee spread, etc., to include in its core some of these items.

Another purpose aimed is a device used at home, to withdraw one part of the product as a reply of a blind perforation thereof, once it is centrally disposed, and this makes possible to insert some substance inside, preferred by the consumer, without need of peeling the fruit (banana).

Finally, another purpose of this invention is a device to obtain in a product such as the banana the possibility to refill it and combine it with other eating substances, despite the scarce consistency thereof and its irregular shape, treating it simply, without deforming it, and without need to peel it, employing an hygienic method through the preparation and refilling stages.

### BACKGROUND OF THE INVENTION

As regards the eating part, more particularly in a fruit like a banana typically the consumer before eating it, would mix it with some other item such as chocolate, cream, toffee spread, honey, etc., which implies peeling the fruint, cut it or not and/or mashing it, and then mix it with any of these substances, all these steps require fork, knife or spoon, on a dish or some related element.

Another form of consuming a banana is adding a coating product once it has been peeled. These cases are not very frequent, and although other different tastes are added to the product, special elements or machines are required, with characteristics similar to the ones employed in the ice-cream coating.

### SUMMARY OF THE INVENTION

In order to obtain in a practical and hygienic form the combination of a fruit like a banana, with a filling, without peeling it first, this invention proposes a device easy to use, to perform the stages to empty the core of a banana, and then fill it with some substance such as chocolate, cream, toffee spread, etc.

The invention consists in a cylindrical head-type piece, punched vertically, featuring on its top a trunk-conic protuberance, centrally punched which coincides with the perforation of the cylindric piece, where the latter features on the bottom base a cylindrical protuberance, defining a surface with a crown-shape rim, where and on the coinciding points with the corner of a virtual triangle there are exposed the ends of at least three arms elastically deformable which define the surfaces adaptable to the banana wrapping, to treat it so as to set it in a straight position, and disposed in a coaxil form to these perforations, a tubular piece with a circular section having on the bottom side an inverted trunk-conic portion defining on its mouth a sharp rim, and on the opposite end this piece is embedded into a staggered hole, made on a cylindrical piece disposed perpendicularly, featuring inside the portion of the hole with a larger diameter an elastomeric bolt resting on a ring-shaped protuberance; such cylindrical piece is covered on the ring shape by a cylindrical sleeve, with an oblong groove partially extended around said sleeve defining a closure of the tubular piece longitudinal conduct; the zone limited by the ends of said plugging features one flap or flange, and projecting from the ends of the cylindrical piece the respective trunk-conic protuberances, with free double curved edges, and this device is supplemented with a cylindrical rod, having on one end a cylindrical coarsening, to clean pushing the tubular piece longitudinal conduct which was filled after having drilled the banana.

### BRIEF DESCRIPTION OF THE SKETCHES

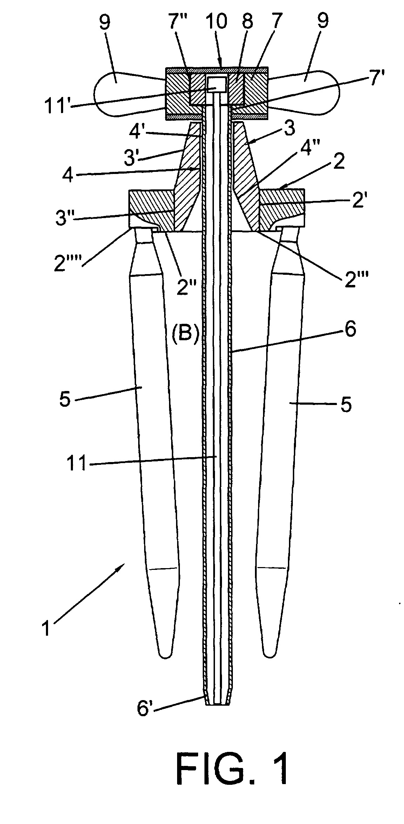

Figure 1 represents a view on a raised plan and partial cut of the device of this invention, in an inoperative position,

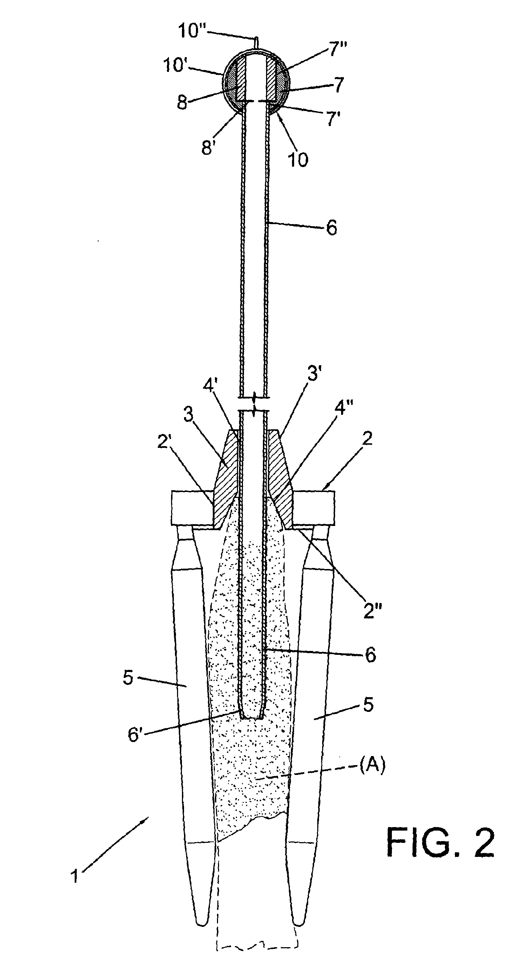

Figure 2 represents a view on a raised plan and partial cut of the device, in the first operative stage,

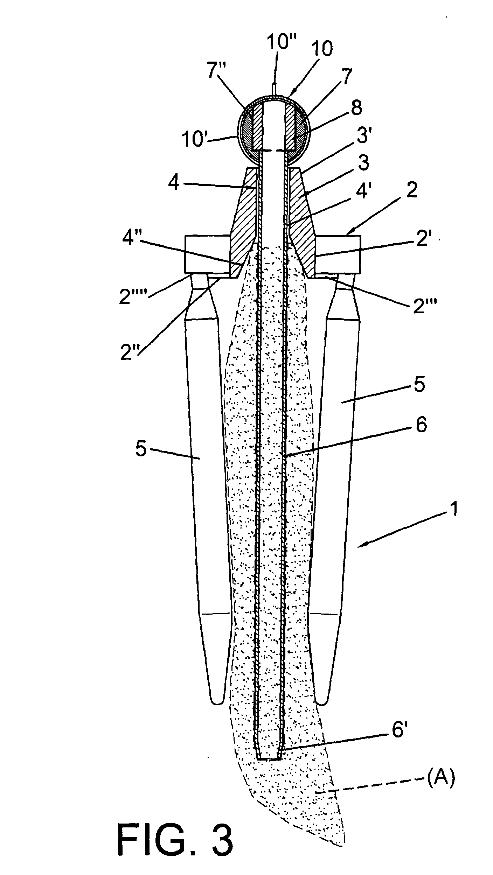

Figure 3 represents a view on a raised plan and cut of the device, in a second oprative stage,

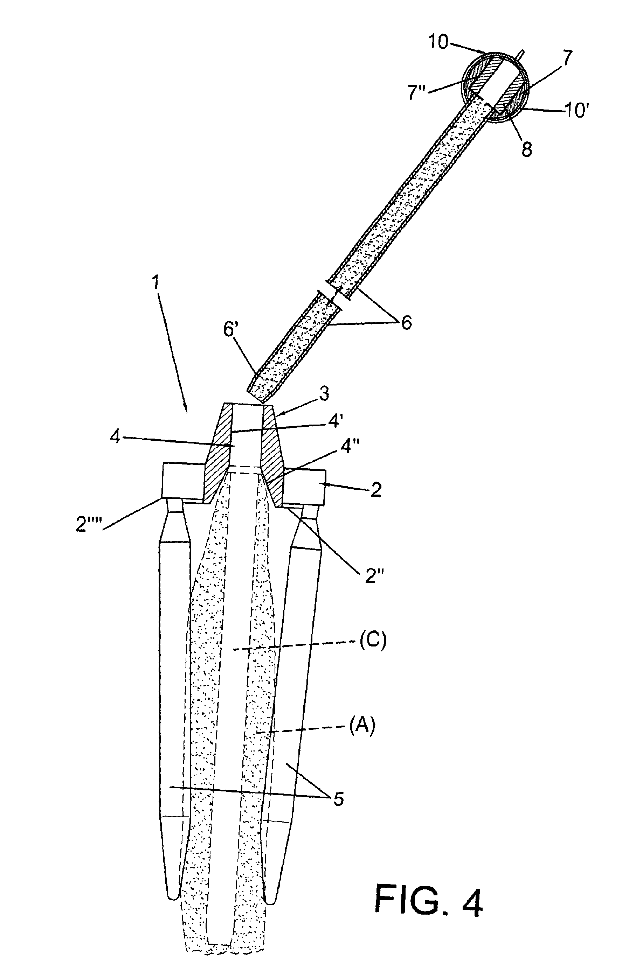

Figure 4 represents a view of the device on a raised plan partially cut, in a third opeative stage

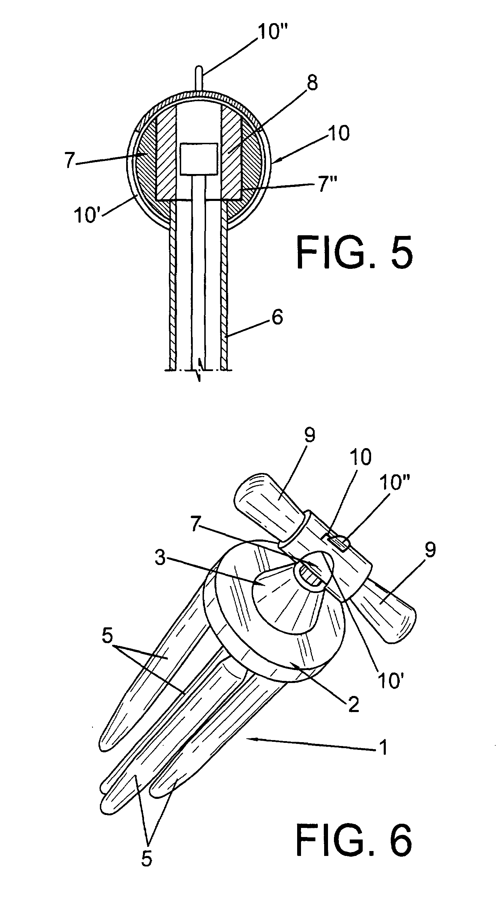

Figure 5 represents a cut view of a detail of the cylindrical piece holding the sleeve, and
Figure 6 represents a view in perspective of the device of this invention.

### DESCRIPTION OF THE PREFERRED MAKING FORM

According to what is represented with the sketches, the device to treat a fruit (banana) which is the subject matter of this invention, is identified with the general reference -1- and comprises a cylindrical piece -2- featuring a central hole -2'- where there is a body made of plastic -3- consisting in a side section which is a trunk-conic upper part -3'- and a bottom cylindrical part -3"- encapsulated in the central hole -2'-of piece -2-, where piece -3- has a pass-through hole -4-, consisting in an upper cylindrical part -4'- that continues in a bottom trunk-conic part -4"- where the cylindrical piece -2- has in turn in its bottom base -2"- a cylindrical protuberance-2'''- surrounded by an edged surface -2''''- like a circular crown, out of which surface at least three arms -5- extend, elastically deformable and these coincide with the corners of a virtual triangular figure, and present cylindrical and trunk-conic sections, where said arms in the position in which the device is used, form a ring-shaped variable space which varies depending on the banana contour -A- and inside the cylindrical hole -4'- there is a tubular piece -6- that moves freely, and in its bottom end it features a trunk-conic part -6'.

Said part -6- is embedded on the other end, into a cylindrical hole -7'- of a cylindrical body disposed cross-sectionally -7- and said hole -7'- continues into a staggered cylindrical portion -7"-, holding aa bolt made of an elastomeric material -8-linked to a ring-shaped protuberance -8'- which is the resting portion -11'- of the rod-11-, and said body -7- features on its free ends the protuberances -9- with a trunk-conic form with free rounded ends, and said cylindrical body -7- is covered in a ring-type form by a sleeve -10- which features a plugging -10'- with an oblong shape, disposed in a ring-type form on said sleeve -10- which defines a closing surfacte of the conduct comprising the elastomeric bolt -8- the passing-through hole -7'- and the tubular piece -6- together with a flap or flange -10"- which turns in the ring-type direction of the sleeve -10- and there is inside of the tubular piece -6- a rod -11-featuring in one end a cylindric coarsening -11'- to empty the product withdrawn through the tubular piece -6.

It is very easy to apply the device of this invention: a banana -A- is introduced into the space -B- limited by the arms -5- until this causes that its end gets into the space limited by the trunk-conic part -4". In the process to introduce the banana resting on one of said arms the banana may be outside the central position at first, and then when tese are applied or accomodated on the product, and given the ring-shape disposition, these will straight the banana -A- and keep it safely, without damaging its structure; once the end of the banana rests on the trunk-conic plugging of the circular piece, the tubular piece -6- is introduced through the hole -4- of the cylindric piece -2-once the rod -11- has been withdrawn, thus permitting the ring shape movement of the sleeve -10- thus causing that when the banana -A- is drilled the remaining product is shifted to the inside of the tubular piece -6- conduct, the conduct of which is opened on its top; once the desired perforation has been obtained in the banana -A- which according to the straightening of said banana -A- is uniform and centralized, the conduct of the tubular piece -6- is closed, and the sleeve -10- is turned by means of the flap or flange -10"- leaving vacuum the inside of the tubular piece -6- conduct, withdrawing it to leave inside the banana -A- a blind hole -C-, which will be filled in a subsequent step with some special substance. Said rod -11- is introduced inside the tubular piece -6- until its coarsened section -11'- rests on the anular protuberance -8'-linked to the elastomeric bolt -8- which empties said tubular piece -6- to use it again.

## Claims

1. A device used to drill a fruit (banana) lengthwise and then fill it **CHARACTERIZED**, because it comprises a first cylindrical piece, linked to a second piece made of plastic drilled in its core, by means of broken sections, to define a passage to channel a third tubular piece with tapered free end, and on the opposite end it is linked to a cylindrical body disposed cross-sectionally, covered in a ring-type form by a sleeve featuring a ring groove which is extended in a partial zone of the diameter of said sleeve, and said cylindrical body features a pass-through hole that links to the tubular piece and is limited by two staggered portions, one of which has an elastomeric bolt resting on a ring type protuberance, and three elastically deformable arms extend from the bottom of the first cylindrical piece, and from a surface with a circular crown type edge and points coinciding with the comers of a virtual triangular figure, defining a ring type space, and inside said tubular piece there is a cylindrical rod, featuring a cylindrical coarse section in one of its ends.

2. A device according to claim 1, **CHARACTERIZED** because the tubular piece has on its interior side wall a series of grooves equally spaced from each other.
